# EUROPÄISCHE PATENTANMELDUNG

(11) **EP 3 319 030 A1**
(43) Veröffentlichungstag der Anmeldung: **09.05.2018**
(21) Anmeldenummer: 17001595.2
(22) Anmeldetag: 25.05.2011
(51) Int. Cl.: G06Q 20/00

(54) **VERFAHREN ZUM ERZEUGEN EINES TRANSAKTIONSSIGNALS**

(30) Priorität: 25.05.2010 DE 102010021374; 12.10.2010 DE 102010048060
(62) Teilanmeldung aus: 11727114.8
(71) Anmelder: Mercedes pay AG, 8700 Küsnacht (CH)
(72) Erfinder: WOLFF, Jürgen, 40213 Düsseldorf (DE)
(74) Vertreter: Tilmann, Max Wilhelm

(57) **Zusammenfassung**

Die Erfindung betrifft ein Verfahren zum Erzeugen eines Transaktionssignals unter Verwendung einer ersten Vorrichtung und einer zweiten Vorrichtung, wobei die erste Vorrichtung und/oder die zweite Vorrichtung dazu geeignet ist, von einem Benutzer getragen zu werden, mit folgenden Schritten wobei ein Benutzer erzeugt mit einer ersten Vorrichtung eine erste Information, die von einem von dem Benutzer gewählten Betrag abhängt, die erste Vorrichtung überträgt die erste Information zu einer Verifizierungsvorrichtung, die Verifizierungsvorrichtung erzeugt in Abhängigkeit von der ersten Information ein Signal, das dazu geeignet ist, von der ersten Vorrichtung in eine zumindest zweidimensionale Darstellung umgesetzt zu werden, die die erste Vorrichtung auf einem Display der ersten Vorrichtung darstellen kann, die Verifizierungsvorrichtung erzeugt in Abhängigkeit der ersten Information eine erste Verifizierungsinformation, das Signal wird von der Verifizierungsvorrichtung zu der ersten Vorrichtung übertragen, das Signal wird von der ersten Vorrichtung in eine zumindest zweidimensionale Darstellung umgesetzt, die die erste Vorrichtung auf dem Display der ersten Vorrichtung wiedergibt, die zumindest zweidimensional Darstellung auf dem Display der ersten Vorrichtung wird mit einer Kamera einer zweiten Vorrichtung unter Erzeugung eines Aufnahmesignals aufgenommen, die zweite Vorrichtung überträgt das Aufnahmesignal oder eine zweite Information, die von dem Aufnahmesignal abhängt, an die Verifizierungsvorrichtung oder eine alternative Verifizierungsvorrichtung, die Verifizierungsvorrichtung, bzw. die alternative Verifizierungsvorrichtung erzeugt aus dem Aufnahmesignal, bzw. der zweiten Information eine zweite Verifizierungsinformation, die erste Verifizierungsinformation und die zweite Verifizierungsinformation werden verglichen und das Transaktionssignal erzeugt, wenn der Vergleich ein vorbestimmtes Ergebnis ergibt.

## Beschreibung

Die Erfindung betrifft ein Verfahren zum Erzeugen eines Transaktionssignals, insbesondere eines Transaktionssignals durch dessen Bearbeitung ein Geldbetrag von einem ersten Konto abgezogen und einem zweiten Konto gutgeschrieben wird.

Aus der Praxis ist das Bedürfnis bekannt, dass ein erster Benutzer einem zweiten Benutzer einen Geldbetrag zur Verfügung stellen möchte. Dies kann durch den Austausch von Banknoten, bzw. Münzen erfolgen, wobei damit der Vorteil verbunden ist, dass der erste Benutzer seine Identität gegenüber dem zweiten Benutzer geheim halten kann, da die übergebene Banknote, bzw. die übergebene Münze den zweiten Benutzer in die Lage versetzt, seinerseits wiederum Transaktionen vorzunehmen, ohne dafür die Identität des ersten Benutzers kennen zu müssen. Die Verwendung von Banknoten und Münzen wird zunehmend jedoch als umständlich empfunden, insbesondere weil dieses Vorgehen voraussetzt, dass der erste Benutzer die für den auszutauschenden Betrag passende Banknote, bzw. die passende Anzahl von Münzen bereithält oder der zweite Benutzer über das passende Wechselgeld verfügt.

Es ist nunmehr vorgeschlagen worden, die von der Mehrzahl der an Geschäftsaktivitäten teilnehmenden Personen bereitgehaltenen Mobiltelefone oder tragbare Computer zur Abwicklung derartiger Transaktionen zu nutzen, bei denen ein Transaktionssignal erzeugt wird, durch dessen Bearbeitung ein Geldbetrag von einem ersten Konto abgezogen und einem zweiten Konto gutgeschrieben wird. Aus EP 1 147 654 B1 ist ein Verfahren bekannt, bei dem der zweite Benutzer, dem der Geldbetrag übertragen werden soll, dem ersten Benutzer eine Rufnummer eines gebührenpflichtigen Service-Telekommunikationsanschlusses bekannt gibt. Der erste Benutzer ruft mit seinem Mobiltelefon diese Rufnummer an. Dadurch wird dem Betreiber des gebührenpflichtigen Service-Telekommunikationsanschlusses die Rufnummer des ersten Benutzers mitgeteilt und gleichzeitig, bzw. durch das Übertragen weiterer Informationen zwischen dem Mobiltelefon des ersten Benutzers und dem Anbieter des gebührenpflichtigen Service-Telekommunikationsanschlusses die Berechtigung gegeben, dem ersten Benutzer den zwischen dem ersten Benutzer und dem zweiten Benutzer vereinbarten Betrag in Rechnung zu stellen. Dieses System ist zum Einen deshalb nachteilig, weil es in der Praxis dazu führt, dass der Betreiber des gebührenpflichtigen Service-Telekommunikationsanschlusses dem zweiten Benutzer, bzw. dem ersten Benutzer beachtliche Gebühren für das Anbieten und Durchführen dieses Service in Rechnung stellt. Ferner ist auf diesem Wege nicht sichergestellt, dass der erste Benutzer den ihm durch den Betreiber des gebührenpflichtigen Service-Telekommunikationsanschlusses in Rechnung gestellten Betrag tatsächlich bezahlt.

Aus US 2010/0008535 A1 ist ein Verfahren bekannt, bei dem der zweite Benutzer mit der Kamera seines Mobiltelefons eine Aufnahme der Kreditkarte des ersten Benutzers macht. Aus dieser Aufnahme wird eine Information generiert, die an eine Verifizierungsvorrichtung übertragen wird. Auf Grundlage dieser Information belastet die Verifizierungsvorrichtung das Konto des ersten Benutzers. Auch bei dieser Vorgehensweise ist nicht sichergestellt, dass die von dem ersten Benutzer präsentierte Kreditkarte tatsächlich gültig ist. Es könnte sich auch um eine Fälschung handeln. Ferner ist bei diesem System nicht sichergestellt, dass der dem ersten Benutzer über seine Kreditkartenabrechnung belastete Betrag tatsächlich gezahlt wird.

Aus der Praxis des Bahnverkehrs und des Luftverkehrs ist es bekannt, dass ein Benutzer bei einem Transportdienstleister (zweiter Benutzer) eine Dienstleistung bestellt und bezahlt, beispielsweise eine Reise von einem ersten Ort an einen zweiten Ort. Der Transportdienstleister stellt dem ersten Benutzer im Anschluss an den - separat abgewickelten - Kauf der Dienstleistung ein Signal zur Verfügung, das von einer Vorrichtung des Dienstleisters auf das Mobiltelefon des ersten Benutzers übertragen wird, wobei das Signal derart ausgebildet ist, dass es dazu geeignet ist, von dem Mobiltelefon des ersten Benutzers in die zweidimensionale Darstellung eines Barcodes umgesetzt zu werden, der auf dem Display des Mobiltelefons dargestellt werden kann. Zur Verifikation, dass der erste Benutzer berechtigt ist, die Transportdienstleistung zu beanspruchen, kann der zweite Benutzer den ersten Benutzer auffordern, das ihm übermittelte Signal, das der erste Benutzer auch auf seinem Mobiltelefon abgespeichert haben kann, mit seinem Mobiltelefon in die zweidimensionale Darstellung eines Barcodes umzusetzen und auf dem Display des Mobiltelefons wiederzugeben. Der zweite Benutzer kann diese zweidimensionale Darstellung auf dem Display des Mobiltelefons des ersten Benutzers mit einer Kamera einer Verifikationsvorrichtung unter Erzeugung eines Aufnahmesignals aufnehmen. Die Verifikationsvorrichtung kann das Aufnahmesignal oder eine Information, die von der Aufnahme abhängt, an eine weitere Verifizierungsvorrichtung übertragen. Die weitere Verifizierungsvorrichtung kann das Aufnahmesignal oder die von der Aufnahme abhängige Information verifizieren und dem zweiten Benutzer eine Bestätigungsinformation übermitteln.

Vor diesem Hintergrund liegt der Erfindung die Aufgabe zugrunde, ein verbessertes Verfahren zum Erzeugen eines Transaktionssignals bereitzustellen.

Diese Aufgabe wird durch den Gegenstand des Hauptanspruchs 1 gelöst. Vorteilhafte Ausführungsformen sind in den Unteransprüchen und der hiernach folgenden Beschreibung wiedergegeben.

Die Erfindung geht von dem Grundgedanken aus, dass die Benutzer anstelle einer Banknote oder einer Münze entweder eine zweidimensionale Darstellung durch deren Bereitstellen einerseits und deren Abfotografieren andererseits "austauschen" oder anstelle einer Banknote oder einer Münze ein NFC-Signal durch Versenden eines Signals unter Verwendung des Near Field Communication-Standards und Empfangen des NFC-Signals "austauschen". Dieses Verfahren bietet, wie der Austausch von Bargeld, die Möglichkeit, dass die Identitäten der beiden Benutzer dem jeweils anderen Benutzer gegenüber geheim gehalten werden können. Des Weiteren müssen die Benutzer keine Informationen über Kreditkarten oder dergleichen austauschen, die von dem Empfänger der jeweiligen Information möglicherweise missbraucht werden können. Schließlich bietet dieses Verfahren die Möglichkeit, vorab zu prüfen, ob der erste Benutzer über den Betrag verfügt, den er dem zweiten Benutzer übergeben möchte und ob, beispielsweise, das Konto des ersten Benutzers gesperrt wurde (bspw. bei Verlust des Mobiltelefons oder des Laptops). Dadurch kann sichergestellt werden, dass sich bei einer nachfolgenden Abwicklung des zwischen den Benutzern vereinbarten Betragsaustauschs keine Nachteile für den den Betrag empfangenden Benutzer entstehen, wenn der erste Benutzer beispielsweise über den Betrag, den er austauschen möchte, gar nicht verfügt.

In einer ersten Variante des erfindungsgemäßen Verfahren zum Erzeugen eines Transaktionssignals wird das Verfahren unter Verwendung einer ersten Vorrichtung und einer zweiten Vorrichtung durchgeführt, wobei die erste Vorrichtung und/oder die zweite Vorrichtung dazu geeignet ist, von einem Benutzer getragen zu werden. Bei dem erfindungsgemäßen Verfahren werden zumindest die folgenden Schritte durchgeführt:
- ein Benutzer erzeugt mit einer ersten Vorrichtung eine erste Information, die von einem Betrag abhängt,
- die erste Vorrichtung überträgt die erste Information zu einer Verifizierungsvorrichtung,
- die Verifizierungsvorrichtung erzeugt in Abhängigkeit von der ersten Information ein Signal, das dazu geeignet ist, von der ersten Vorrichtung in eine zumindest zweidimensionale Darstellung umgesetzt zu werden, die die erste Vorrichtung auf einem Display der ersten Vorrichtung darstellen kann,
- die Verifizierungsvorrichtung erzeugt in Abhängigkeit der ersten Information eine erste Verifizierungsinformation,
- das Signal wird von der Verifizierungsvorrichtung zu der ersten Vorrichtung übertragen,
- das Signal wird von der ersten Vorrichtung in eine zumindest zweidimensionale Darstellung umgesetzt, die die erste Vorrichtung auf dem Display der ersten Vorrichtung wiedergibt,
- die zumindest zweidimensional Darstellung auf dem Display der ersten Vorrichtung wird mit einer Kamera einer zweiten Vorrichtung unter Erzeugung eines Aufnahmesignals aufgenommen,
- die zweite Vorrichtung überträgt das Aufnahmesignal oder eine zweite Information, die von dem Aufnahmesignal abhängt, an die Verifizierungsvorrichtung oder eine alternative Verifizierungsvorrichtung,
- die Verifizierungsvorrichtung, bzw. die alternative Verifizierungsvorrichtung erzeugt aus dem Aufnahmesignal, bzw. der zweiten Information eine zweite Verifizierungsinformation,
- die erste Verifizierungsinformation und die zweite Verifizierungsinformation werden verglichen und das Transaktionssignal erzeugt, wenn der Vergleich ein vorbestimmtes Ergebnis ergibt.

Vergleicht man das erfindungsgemäße Verfahren mit dem Austausch von Banknoten und Münzen, so entnimmt der erste Benutzer den Betrag, den er dem zweiten Benutzer übergeben möchte in Form von Banknoten und Münzen einem Behältnis und präsentiert diese dem zweiten Benutzer. Dieses Vorgehen des Standes der Technik wird bei dem erfindungsgemäßen Verfahren beispielsweise dadurch nachgestellt, dass der Benutzer in einer bevorzugten Ausführungsform des erfindungsgemäßen Verfahrens einen Betrag in seine Vorrichtung eingibt, worauf hin diese Vorrichtung eine erste Information erzeugt, die von dem von dem Benutzer gewählten Betrag abhängt, und diese erste Information zu einer Verifizierungsvorrichtung überträgt. Im Gegenzug erzeugt die Verifizierungsvorrichtung in Abhängigkeit von der ersten Information ein Signal das von der Verifizierungsvorrichtung zu der ersten Vorrichtung übertragen wird und dort in eine zumindest zweidimensionale Darstellung auf dem Display der ersten Vorrichtung umgesetzt wird, die die erste Vorrichtung auf dem Display der ersten Vorrichtung wiedergibt und somit dem zweiten Benutzer präsentiert werden kann. Vergleichbar der Entgegennahme der ihm präsentierten Banknoten und Münzen nimmt der zweite Benutzer die ihm präsentierte zweidimensionale Darstellung entgegen, in dem er mit einer Kamera seiner (der zweiten) Vorrichtung unter Erzeugung eines Aufnahmesignals die zumindest zweidimensionale Darstellung auf dem Display der ersten Vorrichtung aufnimmt. Leitet der zweite Benutzer das Aufnahmesignal oder eine zweite Information, die von dem Aufnahmesignal abhängt, an eine Verifizierungsvorrichtung weiter, so kann die Verifizierungsvorrichtung nach einer Überprüfung des Aufnahmesignals, bzw. der zweiten Information ein Transaktionssignal erzeugen, das dazu führt, dass einem Konto des ersten Benutzers ein Geldbetrag belastet und einem Konto des zweiten Benutzers ein Geldbetrag gutgeschrieben wird. Bei den in diesem Absatz beschrieben Verfahrensschritten handelt es sich um die Darstellung eines bevorzugten Ausführungsbeispiels der Erfindung.

In einer zweiten Variante des erfindungsgemäßen Verfahren zum Erzeugen eines Transaktionssignals werden anstelle der folgenden Schritte:
- die Verifizierungsvorrichtung erzeugt in Abhängigkeit von der ersten Information ein Signal, das dazu geeignet ist, von der ersten Vorrichtung in eine zumindest zweidimensionale Darstellung umgesetzt zu werden, die die erste Vorrichtung auf einem Display der ersten Vorrichtung darstellen kann,
- die Verifizierungsvorrichtung erzeugt in Abhängigkeit der ersten Information eine erste Verifizierungsinformation,
- das Signal wird von der Verifizierungsvorrichtung zu der ersten Vorrichtung übertragen,
- das Signal wird von der ersten Vorrichtung in eine zumindest zweidimensionale Darstellung umgesetzt, die die erste Vorrichtung auf dem Display der ersten Vorrichtung wiedergibt,
- die zumindest zweidimensional Darstellung auf dem Display der ersten Vorrichtung wird mit einer Kamera einer zweiten Vorrichtung unter Erzeugung eines Aufnahmesignals aufgenommen,
die folgenden Schritte durchgeführt werden:
- die Verifizierungsvorrichtung erzeugt in Abhängigkeit von der ersten Information ein Signal, das von der Verifizierungsvorrichtung zu der ersten Vorrichtung übertragen wird,
- die Verifizierungsvorrichtung erzeugt in Abhängigkeit der ersten Information eine erste Verifizierungsinformation,
- die erste Vorrichtung erzeugt in Abhängigkeit des Signals ein NFC-Signal, das unter Verwendung des Near-Field-Communication-Standards von der ersten Vorrichtung zur einer zweiten Vorrichtung übertragen werden kann, und von der ersten Vorrichtung zur zweiten Vorrichtung unter Verwendung des Near-Field-Communication-Standards übertragen wird,
- die zweite Vorrichtung erzeugt auf Grundlage des über von ihr empfangenen NFC-Signals ein Aufnahmesignal.

Diese Änderung der durchzuführenden Schritte trägt dem Umstand Rechnung, dass das erfindungsgemäße Verfahren von dem Grundgedanken ausgeht, dass die Benutzer anstelle einer Banknote oder einer Münze entweder eine zweidimensionale Darstellung durch deren Bereitstellen einerseits und deren Abfotografieren andererseits "austauschen" oder anstelle einer Banknote oder einer Münze ein NFC-Signal durch Versenden eines Signals unter Verwendung des Near Field Communication-Standards und Empfangen des NFC-Signals "austauschen".

Die **Near Field Communication, NFC,** ist ein Übertragungsstandard zum kontaktlosen Austausch von Daten über kurze Strecken. NFC ermöglicht den Austausch von Informationen. Sicherheitsfunktionen sind in der Hardware der Vorrichtungen integriert. Häufig wird für Zugangskontrolle und -steuerung Bluetooth eingesetzt.

Die NFC-Technik basiert auf der Kombination aus Smartcard- und kontaktlosen Verbindungstechniken. Sie arbeitet in einem Frequenzbereich von 13,56 MHz und bietet eine Datenübertragungsrate von beispielsweise 424 kBit/s bei einer Reichweite von beispielsweise 10 Zentimetern. Dies ist gewünscht, damit die Kontaktaufnahme als Zustimmung zu einer Transaktion gewertet werden kann. NFC ist durch ISO 14443, 18092, 21481 ECMA 340, 352, 356, 362 beziehungsweise ETSI TS 102 190 standardisiert.

Die Kommunikation zwischen NFC-fähigen Geräten kann sowohl aktiv-passiv als auch aktiv-aktiv sein (Peer-To-Peer) im Gegensatz zur herkömmlichen Kontaktlostechnik in diesem Frequenzbereich (nur aktiv-passiv). Daher stellt NFC eine Verbindung zur RFID-Welt dar. NFC ist größtenteils kompatibel mit weithin verwendeter Smartcard-Infrastruktur basierend auf ISO/IEC 14443-A (z. B. NXP's Mifare-Technik) bzw. ISO/IEC 14443-B (vor allem in frankophilen Ländern) wie auch mit Sonys FeliCa-Card (z. B. Octopus-Karte in Hong Kong).

Mit dem erfindungsgemäßen Verfahren wird ein Transaktionssignal erzeugt. Das Transaktionssignal kann beispielsweise das Signal, bzw. eines der Signale einer ausgetauschten Signalfolge sein, das, bzw. die zwischen einem ersten Geldinstitut, bei dem der erste Benutzer ein Konto führt, und einem zweiten Geldinstitut, bei dem der zweite Benutzer ein Konto führt, ausgetauscht werden, um in aus der Praxis bekannter Weise einen Geldbetrag von dem Konto des ersten Benutzers auf das Konto des zweiten Benutzers zu übertragen. Ein derartiges Transaktionssignal ist aus dem elektronischen Bankverkehr gut bekannt. Das bei dem erfindungsgemäßen Verfahren erzeugte Transaktionssignal kann aber auch ein Transaktionssignal sein, mit dem ein auf einer Datenverarbeitungseinrichtung abgelegtes Konto eines ersten Benutzers um einen ersten Betrag belastet und ein auf derselben Datenverarbeitungseinrichtung geführtes Konto eines zweiten Benutzers mit dem selben Betrag gutgeschrieben wird. Diese zweite Art des Transaktionssignals kann beispielsweise eingesetzt werden, wenn der erste Benutzer und der zweite Benutzer bei dem gleichen Geldinstitut Konten führen. Ebenso kann das als zweites beschriebene Transaktionssignal eingesetzt werden, wenn ein Service-Dienstleister dem ersten Benutzer und dem zweiten Benutzer den Service eines Austauschs von Geldbeträgen anbietet und dazu von dem ersten Benutzer und dem zweiten Benutzer fordert, dass beide Benutzer Konten bei dem Service-Dienstleister führen. Der Service-Dienstleister kann beispielsweise fordern, dass der erste Benutzer auf seinem bei dem Service-Dienstleister geführten Konto ein Guthaben aufweisen muss, bevor der Service-Dienstleister einen Betrag von dem bei ihm geführten Konto des ersten Benutzers auf das bei ihm geführte Konto des zweiten Benutzers überträgt. Ebenso kann das Transaktionssignal zwischen einem Service-Dienstleister und einer Bank ausgetauscht werden.

Das erfindungsgemäße Verfahren kann dazu verwendet werden, um einen Betrag von einem Konto des ersten Benutzers auf ein Konto des zweiten Benutzers zu übertragen (das erzeugte Transaktionssignal bewirkt, dass ein Betrag von dem Konto des ersten Benutzers auf das Konto des zweiten Benutzers übertragen wird). Ebenso kann das erfindungsgemäße Verfahren dazu verwendet werden, um einen Betrag von einem Konto des zweiten Benutzers auf ein Konto des ersten Benutzers zu übertragen (das erzeugte Transaktionssignal bewirkt, dass ein Betrag von dem Konto des zweiten Benutzers auf das Konto des ersten Benutzers übertragen wird).

Als Beispielfall für die Variante, bei der gemäß einer bevorzugten Ausführungsform das erzeugte Transaktionssignal bewirkt, dass ein Betrag von dem Konto des ersten Benutzers auf das Konto des zweiten Benutzers übertragen wird, kann der beispielhafte Fall gesehen werden, dass der erste Benutzer den Betrag, den er dem zweiten Benutzer zukommen lassen will, in die (seine) erste Vorrichtung eingibt, im weiteren Verlauf des Verfahrens mit der ersten Vorrichtung ein NFC-Signal an eine zweite Vorrichtung (die Vorrichtung des zweiten Benutzers) übermittelt oder eine zumindest zweidimensionale Darstellung auf dem Display seiner ersten Vorrichtung wiedergibt, die der zweite Benutzer mit der Kamera der zweiten Vorrichtung aufnimmt, so daß dann im weiteren Verlauf des Verfahrens ein Transaktionssignal erzeugt werden kann, das bewirkt, dass ein Betrag von dem Konto des ersten Benutzers auf das Konto des zweiten Benutzers übertragen wird. Dieser Beispielsfall tritt beispielsweise in Situationen ein, in denen der Benutzer den Betrag selbst frei wählt, bzw. es bevorzugt, einen ihm genannten Betrag selbst in seine Vorrichtung einzugeben.

Als Beispielfall für die Variante, bei der gemäß einer bevorzugten Ausführungsform das erzeugte Transaktionssignal bewirkt, dass ein Betrag von dem Konto des zweiten Benutzers auf das Konto des ersten Benutzers übertragen wird, kann der beispielhafte Fall gesehen werden, dass der erste Benutzer den Betrag, den er von dem zweiten Benutzer bekommen möchte, in die (seine) erste Vorrichtung eingibt, im weiteren Verlauf des Verfahrens mit der ersten Vorrichtung ein NFC-Signal an eine zweite Vorrichtung (die Vorrichtung des zweiten Benutzers) übermittelt oder eine zumindest zweidimensionale Darstellung auf dem Display seiner ersten Vorrichtung wiedergibt, die der zweite Benutzer mit der Kamera der zweiten Vorrichtung aufnimmt, so daß dann im weiteren Verlauf des Verfahrens ein Transaktionssignal erzeugt werden kann, das bewirkt, dass ein Betrag von dem Konto des zweiten Benutzers auf das Konto des ersten Benutzers übertragen wird. Dieser Beispielfall tritt beispielsweise in Situationen ein, in denen der erste Benutzer ein Händler ist, der einen bestimmten Betrag von einem Kunden fordert und der Kunde durch Empfang des NFC-Signals, bzw. Aufnahme der zumindest zweidimensionalen Darstellung und ggf. weiterer Bestätigungsaktionen die Forderung akzeptiert und ein Transaktionssignal erzeugt werden kann, das bewirkt, dass ein Betrag von dem Konto des auf das Konto des ersten Händlers übertragen wird.

Bei dem erfindungsgemäßen Verfahren werden eine erste Vorrichtung und eine zweite Vorrichtung eingesetzt, wobei die erste Vorrichtung und/oder die zweite Vorrichtung dazu geeignet ist, von einem Benutzer getragen zu werden. Unter einer Vorrichtung, die dazu geeignet ist, von einem Benutzer getragen zu werden, wird insbesondere eine Vorrichtung verstanden, deren Abmessungen (Länge x Breite x Höhe) kleiner als 0,5 m x 0,5 m x 0,5 m sind und deren Gewicht kleiner als 10 kg ist. Insbesondere bevorzugt sind die Abmessungen kleiner als 0,5 m x 0,5 m x 0,1 m. Insbesondere bevorzugt sind die Abmessungen kleiner als 0,15 m x 0,1 m x 0,05 m. Das Gewicht der ersten und/oder zweiten Vorrichtung ist insbesondere bevorzugt kleiner als 5 kg, besonders bevorzugt kleiner als 1 kg und insbesondere bevorzugt kleiner als 0,5 kg. In einer bevorzugten Ausführungsform ist die erste und/oder die zweite Vorrichtung ein Laptop oder ein Mobiltelefon, insbesondere bevorzugt ein Tablet-PC, ein Navigationsgerät, ein Fernsehgerät, ein Zahlungsverkehrsterminal, eine Spielekonsole oder ein MP3 Player.

In einer bevorzugten Ausführungsform ist die erste Vorrichtung ein Mobiltelefon oder ein Laptop während die zweite Vorrichtung eine stationäre Vorrichtung ist, die von einem Benutzer nicht getragen werden kann. Beispielsweise kann die zweite Vorrichtung ein Fahrkartenautomat sein, dessen Kamera der Benutzer der ersten Vorrichtung die auf dem Display der ersten Vorrichtung dargestellte, zumindest zweidimensionale Darstellung vorhält und dadurch den Betrag bezahlen kann, der zum Erzeugen der Fahrkarte bezahlt werden muß, bzw. in dessen Empfangsbereich der Benutzer der ersten Vorrichtung seine erste Vorrichtung hält, um zwischen der zweiten Vorrichtung und der ersten Vorrichtung ein NFC-Signal auszutauschen. Ebenso kann die zweite Vorrichtung beispielsweise die Kasse eines Geschäfts sein, beispielsweise eines Supermarkts, deren Kamera der Benutzer der ersten Vorrichtung zum Bezahlen der von ihm gewählten Waren die auf dem Display seiner ersten Vorrichtung wiedergegebene, zumindest zweidimensionale Darstellung darbietet, bzw. in deren Empfangsbereich der Benutzer der ersten Vorrichtung seine erste Vorrichtung hält, um zwischen der zweiten Vorrichtung und der ersten Vorrichtung ein NFC-Signal auszutauschen. Ebenso kann die zweite Vorrichtung ein Computer, beispielsweise der Computer des Benutzers sein, auf den der Benutzer eine Software, ein Musiktitel, einen Film oder ein elektronisches Buch aus dem Internet laden möchte. Zum Bezahlen dieser Dienstleistung kann der erste Benutzer der Kamera des Computers die auf dem Display seiner ersten Vorrichtung wiedergegebene zumindest zweidimensionale Darstellung darbieten und damit auf eine Abfrageanforderung auf seinem Computer hin die Dienstleistung bezahlen.

In einer besonders bevorzugten Ausführungsform ist die zweite Vorrichtung ein Mobiltelefon, während die erste Vorrichtung eine stationäre, nicht von dem Benutzer tragbare Vorrichtung ist. Beispielsweise kann die erste Vorrichtung ein Bankautomat sein, an dem der Benutzer einen Geldbetrag abheben und auf ein anderes Konto, beispielsweise das Konto, mit dem er dann selbst wiederum Transaktionen mit seinem Mobiltelefon durchführen möchte, aufladen kann. Hierzu kann der Bankautomat auf seinem Display die zumindest zweidimensionale Darstellung wiedergeben. Der erste Benutzer kann mit seiner als Mobiltelefon ausgeführten zweiten Vorrichtung und der Kamera des Mobiltelefons diese von dem Bankautomaten dargebotene zweidimensionale Darstellung unter Erzeugung des Aufnahmesignals aufnehmen, bzw. durch Einbringen der zweiten Vorrichtung in den Empfangsbereich der ersten Vorrichtung einen Austausch eines NFC-Signals zwischen der zweiten Vorrichtung und der ersten Vorrichtung ermöglichen und dadurch mit den weiteren Schritten des erfindungsgemäßen Verfahrens das Transaktionssignal erzeugen.

Bei dem erfindungsgemäßen Verfahren wird von einem Benutzer mit einer ersten Vorrichtung eine erste Information erzeugt, die von einem Betrag abhängt. In einer bevorzugten Ausführungsform erzeugt der Benutzer mit der ersten Vorrichtung eine erste Information, die von einem von dem Benutzer gewählten Betrag abhängt. Insbesondere bevorzugt handelt es sich bei dem von dem Benutzer gewählten Betrag um einen numerischen Betrag, beispielsweise einen numerischen Betrag in dem Format eines Geldbetrags. Der Benutzer kann die erste Information erzeugen, indem er auf eine Eingabeanforderung der ersten Vorrichtung hin über eine Eingabevorrichtung der ersten Vorrichtung, beispielsweise eine Tastatur, oder ein berührungsempfindliches Display den Betrag eingibt und die erste Vorrichtung aus dieser Eingabe die erste Information erzeugt. Insbesondere bevorzugt weist die Eingabevorrichtung Zahlenfelder auf, mit denen der Benutzer einen beliebigen Betrag eingeben kann. Die Eingabeaufforderung kann jedoch auch in der Darstellung vorgewählter Beträge, beispielsweise der Betragsstaffelung der Banknoten und der Münzen einer vorgewählten Währung entsprechen, wobei der Benutzer den Betrag wählen kann, in dem er über die Eingabevorrichtung, beispielsweise eine Tastatur oder aber insbesondere bevorzugt ein berührungsempfindliches Display den Betrag auswählen kann, indem er die zu dem von ihm gewünschten Betrag entsprechende Darstellung auswählt. In einer bevorzugten Ausführungsform der zuletzt beschriebenen Ausführungsform kann der Benutzer beispielsweise auch einen durch die dargestellten Symbole nicht dargestellten Betrag wählen, indem er einzelne Symbole mehrfach auswählt. So kann der Benutzer beispielsweise den Betrag von 30,00 Euro auswählen, indem er einmal eine Darstellung eines 20,00 Euro-Scheins und einmal die Darstellung eines 10,00 Euro-Scheins auswählt. In einer bevorzugten Ausführungsform erfolgt die Auswahl des Betrags durch eine Auswahl von in der ersten Vorrichtung abgelegten, auf dem Display der ersten Vorrichtung dargestellten Abbildungen von Beträgen. In dieser bevorzugten Ausführungsform sind die darzustellenden Beträge dauerhaft in einem Speicher der ersten Vorrichtung abgelegt. In dieser bevorzugten Ausführungsform werden die Beträge insbesondere bevorzugt nicht in dem zeitlichen Kontext der Durchführung des erfindungsgemäßen Verfahrens, insbesondere bevorzugt nicht innerhalb von 5 Minuten, insbesondere bevorzugt nicht innerhalb von 1 Stunde bevor der Benutzer die erste Information erzeugt, von einer externen Vorrichtung auf die erste Vorrichtung aufgespielt. In einer bevorzugten Ausführungsform wird das erfindungsgemäße Verfahren nämlich nicht dazu verwendet, Fixbeträge zu bezahlen, die von einer externen Vorrichtung beispielsweise über das Internet auf die erste Vorrichtung eingespielt werden, beispielsweise wenn der Benutzer eine Software, einen Musiktitel, einen Videofilm oder ein Buch auf seine erste Vorrichtung laden möchte und für diese Dienstleistung einen Betrag bezahlen muss. Das erfindungsgemäße Verfahren soll nämlich insbesondere bevorzugt zum Erzeugen eines Transaktionssignals für einen von dem Benutzer frei gewählten Betrag verwendet werden und nicht für einen von dem Benutzer gewählten, aber extern vorgegebenen Betrag verwendet werden, auch wenn das erfindungsgemäße Verfahren selbstverständlich für derartige Anwendungen ebenfalls eingesetzt werden kann.

In einer bevorzugten Ausführungsform ist das erfindungsgemäße Verfahren derart umgesetzt, dass es dem Benutzer die Möglichkeit gibt, einen frei wählbaren Betrag einzugeben und aufbauend auf dieser Eingabe die erste Information zu erzeugen. Insbesondere bevorzugt wählt der Benutzer den Betrag, auf dessen Grundlage die erste Information erzeugt wird ohne Rückgriff auf einen von ihm nicht festgelegten, beispielsweise in der ersten Vorrichtung abgelegten Fixbetrag aus, wobei als Auswählen eines Fixbetrags das Selektieren des Fixbetrags verstanden wird und nicht das freie Auswählen eines frei wählbaren Betrags unter Rückgriff auf das Drücken auf die auf einem berührungsempfindlichen Display dargestellten Symbole.

Die von dem Benutzer mit der ersten Vorrichtung erzeugte erste Information muß jedoch nicht von einem Betrag abhängen, der von dem Benutzer gewählten wird. In einer bevorzugten Ausführungsform erzeugt der Benutzer mit der ersten Vorrichtung eine erste Information, in dem er von einer weiteren Vorrichtung, insbesondere bevorzugt von der zweiten Vorrichtung, ein Forderungssignal empfängt, das von einem Betrag abhängt, und auf Grundlage dieses Forderungssignal die erste Information erzeugt, die von einem Betrag abhängt. So kann die weitere Vorrichtung, insbesondere bevorzugt die zweite Vorrichtung, beispielsweise ein Kassensystem, in Abhängigkeit eines Betrags, beispielsweise eines für eine Ware zu zahlenden Betrags, ein Forderungs-NFC-Signal erzeugen, das unter Verwendung des Near-Field-Communication-Standards von der weiteren Vorrichtung, insbesondere bevorzugt der zweiten Vorrichtung, zu der ersten Vorrichtung unter Verwendung des Near-Field-Communication-Standards übertragen wird. Auf Grundlage des von der ersten Vorrichtung empfangenen Forderungs-NFC-Signal kann der erste Benutzer eine erste Information erzeugen. Das kann beispielsweise dadurch erfolgen, dass der erste Benutzer mit der ersten Vorrichtung einen Authentifizierungsschritt durchführt. Beispielsweise kann bei Empfang des Forderungs-NFC-Signals durch die erste Vorrichtung von der ersten Vorrichtung eine Aufforderung (optisch, akustisch oder haptisch) erzeugt werden, die der erste Benutzer zum Erzeugen der ersten Information bestätigen muß. Beispielsweise kann als Aufforderung auf einem möglicherweise bei der ersten Vorrichtung vorgesehnen Display eine Aufforderungsfeld angzeigt werden, dass der erste Benutzer durch eine Eingabe auf einer möglicherweise vorgesehnen Tastatur der ersten Vorrichtung oder durch eine Eingabe auf einem möglicherweise vorgesehnen berührungsempfindlichen Display der ersten Vorrichtung bestätigt. Diese Bestätigung kann beispielsweise auch unter Eingabe eines Verifizierungscodes (PIN) erfolgen. Ebenso kann die Aufforderung beispielsweise darin bestehen, dass die erste Vorrichtung einen Ton erzeugt, nach dessen Ertönen der erste Benutzer durch eine Eingabe auf einer möglicherweise vorgesehnen Tastatur der ersten Vorrichtung oder durch eine Eingabe auf einem möglicherweise vorgesehnen berührungsempfindlichen Display der ersten Vorrichtung eine Bestätigung eingibt. Auch hier kann es vorgesehen werden, dass die Eingabe eines PINs notwendig ist. Ebenso kann die Aufforderung darin bestehen, dass die erste Vorrichtung ein haptisches Signal erzeugt, beispielsweise über eine Zeitperiode vibriert, wonach der erste Benutzer durch eine Eingabe auf einer möglicherweise vorgesehnen Tastatur der ersten Vorrichtung oder durch eine Eingabe auf einem möglicherweise vorgesehnen berührungsempfindlichen Display der ersten Vorrichtung eine Bestätigung eingibt. Auch hier kann es vorgesehen werden, dass die Eingabe eines PINs notwendig ist.

Wird das Ausführungsbeispiel realisiert, bei dem der erste Benutzer mit der ersten Vorrichtung ein Forderungssignal empfängt, das von einem Betrag abhängt, und auf Grundlage dieses Forderungssignal die erste Information erzeugt wird, die von einem Betrag abhängt, so kann es vorgesehen sein, dass die erste Information mit der ersten Vorrichtung ohne weitere Interaktion des Benutzer mit der ersten Vorrichtung und nach Empfang des Forderungssignals erzeugt wird. Diese Fallgestaltung kann beispielsweise in Fällen eingesetzt werden, in denen festgelegt wird, dass der erste Benutzer allein dadurch, dass er die erste Vorrichtung das Forderungssignal empfangen läßt, seine Einwilligung zur Erzeugung der ersten Information gibt. Besonders bevorzugt ist jedoch, dass die erste Information nach Empfang des Forderungssignals erst nach weiterer Interaktion des ersten Benutzers mit der ersten Vorrichtung erzeugt wird, beispielsweise nach der Bestätigung einer Aufforderung. Dadurch kann verhindert werden, dass eine erste Information erzeugt wird, ohne dass der erste Benutzer dies wünscht.

Die von dem Benutzer erzeugte erste Information ist insbesondere bevorzugt ein Signal oder der Teil eines Signals, das zwischen der ersten Vorrichtung und einer Verifizierungsvorrichtung ausgetauscht werden kann. Die erste Information kann ein Signal, bzw. Teil eines Signals sein, das ein Mobiltelefon zum Versenden einer SMS oder einer MMS mit einer Verifizierungsvorrichtung, beispielsweise einer in das Mobilfunknetz eingebetteten Datenverarbeitungseinrichtung austauscht. Ebenso kann die erste Information ein Signal, bzw. Teil eines Signals sein, die die erste Vorrichtung, die in diesem Ausführungsbeispiel als Mobilfunktelefon oder auch als Computer ausgebildet sein kann, über das Internet, auf das die erste Vorrichtung über ein Funknetzwerk (beispielsweise W-LAN oder Mobilfunknetz) aber auch über ein kabelgebundenes Netzwerk zugreifen kann, mit einer Verifizierungsvorrichtung, beispielsweise einer mit dem Internet verbundenen Datenverarbeitungseinrichtung austauscht. Das zwischen der ersten Vorrichtung und der Verifizierungsvorrichtung ausgetauscht Signal kann ferner über eine LAN-Verbindung oder beispielsweise über eine erdgebundene Telefonleitung erfolgen. Eine Mobilfunk-, bzw. erdgebundene Telefonverbindung zwischen der ersten Vorrichtung und der Verifizierungsvorrichtung kann auch als Dial-In-Verbindung ausgebildet sein. Der Informationsaustausch zwischen der ersten Vorrichtung und der Verifizierungsvorrichtung kann mittels eines verschlüsselten Signals erfolgen.

Insbesondere bevorzugt ist die erste Information ein Signal oder ein Teil eines Signals, das in der Verifizierungsvorrichtung weiterverarbeitet werden kann und dabei die erste Information derart in dem Signal, bzw. in dem Teil des Signals enthalten ist, dass in der Verifikationsvorrichtung Verfahrensschritte, die von dem Wert des Betrags abhängen, entsprechend dem Wert des Betrags durchgeführt werden können, weil die Verifizierungsvorrichtung durch das Signal, bzw. durch den Teil des Signals den Wert des Betrags auslesen kann.

Bei dem erfindungsgemäßen Verfahren überträgt die erste Vorrichtung die erste Information zu einer Verifizierungsvorrichtung. Insbesondere bevorzugt überträgt die erste Vorrichtung ein Signal, das die erste Information wiedergibt, bzw. das einen Teil aufweist, der von der ersten Information abhängt. Die Verifizierungsvorrichtung ist insbesondere bevorzugt eine Datenverarbeitungseinrichtung, die derart ausgebildet ist, dass sie Signale von der ersten Vorrichtung empfangen kann. Insbesondere bevorzugt ist die Verifizierungsvorrichtung eine Datenverarbeitungseinrichtung, die in das Internet eingebettet ist und über das Internet entweder kabelgebunden oder kabelgebunden und streckenweise über ein Funknetzwerk oder nur über ein Funknetzwerk Signale mit der ersten Vorrichtung austauschen kann. Als Verifizierungsvorrichtung wird auch ein Netzwerk von Datenverarbeitungsanlagen verstanden, beispielsweise das Netzwerk von Datenverarbeitungsanlagen einer Bank.

In einer bevorzugten Ausführungsform erfolgt die Übertragung der ersten Information zu einer Verfizierungseinrichtung nur, wenn der Benutzer auf eine (ggf. weitere) Aufforderung hin eine (ggf. weitere) Bestätigung eingegeben hat. Beispielsweise kann der erste Benutzer nachdem die erste Vorrichtung die erste Information erzeugt hat mittels einer Aufforderung (optisch, akustisch, haptisch) aufgefordert werden, die Übertragung der ersten Information zu einer Verifizierungseinrichtung freizugeben. In einer bevorzugten Ausführungsform kann gefordert werden, dass die Bestätigung unter Eingabe eines PIN erfolgt.

Der Inhalt der erste Information kann neben dem Betrag auch weitere Teilinformationen enthalten. Beispielsweise kann als Teil der ersten Information eine Information über ein Erkennungsmerkmal der ersten Vorrichtung enthalten sein. Ein mögliches Erkennungsmerkmal kann z.B. die Geräte ID / - Identifikationsnummer sein. Ebenso kann als Teil der ersten Information eine Information über eine von dem ersten Benutzer nach einer Aufforderung eingegebene PIN sein. In einer bevorzugten Ausführungsform kann der Inhalt der ersten Information oder eine separat übermittelte Ortinformation eine Information über den Standort der ersten Vorrichtung beinhalten. In einer bevorzugten Ausführungsform ist die erste Vorrichtung deshalb derart ausgebildet, dass sie ihre Position, beispielsweise durch Ausnutzung des Global Positioning Systems (GPS) bestimmen kann und die Information über ihre Position als Teil der ersten Information oder als separat übermittelte Ortinformation von der ersten Vorrichtung zu der Verifizierungsvorrichtung übertragen kann. Die Verifizierungsvorrichtung kann dazu ausgebildet sein, aufgrund der ihr übermittelten Information über den Standort der ersten Vorrichtung eine Überprüfung vorzunehmen und ggf. die weitere Durchführung des erfindungsgemäßen Verfahrens zu blockieren, bzw. das Konto des ersten Benutzers zu sperren.

Bei der ersten Alternative des erfindungsgemäßen Verfahren, die von dem "Austausch" einer zumindest zweidimensionalen Darstellung ausgeht, erzeugt die Verifizierungsvorrichtung in Abhängigkeit von der ersten Information ein Signal, das dazu geeignet ist, von der ersten Vorrichtung in eine zumindest zweidimensionale Darstellung umgesetzt zu werden, die die erste Vorrichtung auf einem Display der ersten Vorrichtung darstellen kann. Insbesondere bevorzugt ist das von der Verifizierungsvorrichtung erzeugte Signal dazu geeignet, von der ersten Vorrichtung in eine zumindest zweidimensionale Darstellung eines Barcodes umgesetzt zu werden. Als Barcode wird insbesondere auch ein QR-Code verstanden. Ebenso wird als Barcode ein Aztec-Code, ein Brandable Dotcode, ein Quickmark, ein BeeTagg, eine DataMatrix, eine Cool-Data-Matrix, ein Trillcode, ein Connexto und/oder ein TMS-Code verstanden.

Bei der zweiten Alternative des erfindungsgemäßen Verfahren, die von dem "Austausch" eines NFC-Signals ausgeht, erzeugt die Verifizierungsvorrichtung in Abhängigkeit von der ersten Information ein Signal, das an die erste Vorrichtung übertragen werden kann und in dessen Abhängigkeit die erste Vorrichtung das NFC-Signal erzeugen kann.

Das Signal, bzw. die von der Vorrichtung umgesetzte zumindest zweidimensionale Darstellung, bzw. das NFC-Signal kann eine Information über den gewählten Betrag enthalten, beispielsweise als Teil des Signals, bzw. beispielsweise als Teil der umgesetzten zweidimensionalen Darstellung, bzw. als Teil des NFC-Signal. Das Signal kann jedoch auch die Umsetzung einer von der Verifikationsvorrichtung fortlaufend geführten Fallnummer sein, wobei beispielsweise in der Verifizierungsvorrichtung eine Tabelle hinterlegt sein kann, die der Fallnummer den gewählten Betrag zuordnet. Unter dem Verfahrensschritt des Erzeugens eines Signals in Abhängigkeit von der ersten Information ist also nicht zwingend zu verstehen, dass das Signal auch eine Information über den tatsächlichen Wert des gewählten Betrags enthalten muss. Das Erzeugen des Signals in Abhängigkeit von der ersten Information wird auch so verstanden, dass das alleinige Empfangen einer ersten Information durch die Verifizierungsvorrichtung Anlass für die Verifizierungsvorrichtung ist, ein Signal zu erzeugen, auch wenn dieses Signal den tatsächlichen Wert des gewählten Betrags nicht enthält, wie beispielsweise in dem unmittelbar vorstehenden Ausführungsbeispiel anhand der Fallnummern dargestellt. Anstelle der Fallnummer können beispielsweise auch Zufallszahlen als Grundlage für das Erzeugen des Signals verwendet werden.

Das von der Verifizierungsvorrichtung erzeugte Signal kann weitere Informationen enthalten, beispielsweise einen Gültigkeitszeitraum. Diese Information über den Gültigkeitszeitraum kann beispielsweise dazu verwendet werden, um auf dem Display der ersten Vorrichtung eine Wiedergabe zu erzeugen, die anzeigt wann (absolut gesehen) oder im Sinne eines Zählers nach Verstreichen eines Zeitrahmens die zweidimensionale Darstellung ungültig wird, bzw. ein versendetes NFC-Signal ungültig wird, bzw. ggf. sogar das NFC-Signal gar nicht mehr versendet wird. Unter einer ungültigen zweidimensionalen Darstellung, bzw. einem ungültigen NFC-Signal wird eine zweidimensionale Darstellung, bzw. ein NFC-Signal verstanden, bei der/dem nach dem Durchführen der weiteren erfindungsgemäßen Verfahrensschritte bei dem Vergleich der ersten Verifizierungsinformation und der zweiten Verifizierungsinformation kein Transaktionssignal erzeugt wird. In einer bevorzugten Ausführungsform beträgt der Gültigkeitszeitraum weniger als 1 Woche, insbesondere bevorzugt weniger als 1 Tag, insbesondere bevorzugt weniger als 1 Stunde und besonders bevorzugt weniger als 5 Minuten. Ebenso kann die erste Vorrichtung so eingerichtet sein, dass sie nach Ablauf des Gültigkeitszeitraums das auf dem Signal aufbauende NFC-Signal nicht mehr versendet.

Das Erzeugen des Signals in der Verifizierungsvorrichtung kann in einer bevorzugten Ausführungsform neben der Abhängigkeit von der ersten Information auch in Abhängigkeit von weiteren Informationen erfolgen. Beispielsweise kann die Verifizierungsvorrichtung beim Eingang der ersten Information prüfen, ob ein Konto des ersten Benutzers eine Deckung aufweist, die größer ist als der gewählte Betrag oder ob das Konto des ersten Benutzers beispielsweise einen Überziehungsrahmen und oder Verfügungsrahmen aufweist, der größer ist als der gewählte Betrag. Erfolgt in der bevorzugten Ausführungsform das Erzeugen des Signals neben der Abhängigkeit von der ersten Information auch in Abhängigkeit von weiteren Informationen, so kann in dieser bevorzugten Ausführungsform vorgesehen sein, dass die Verifizierungsvorrichtung kein Signal erzeugt, wenn die Verifizierungsvorrichtung keine weiteren Informationen erhält, beispielsweise die Freigabe, dass das Konto des Benutzers eine hinreichende Deckung aufweist.

In einer bevorzugten Ausführungsform enthält das Signal, das von der Verifizierungsvorrichtung zu der ersten Vorrichtung übertragen wird, keine Informationen, die einen Rückschluss auf die Persönlichkeit des Benutzers zulassen. Insbesondere bevorzugt enthält das Signal keine Informationen, die - und sei es auch nur verschlüsselt - den Namen, einen möglicherweise gewählten Alias des Namens, die Telefonnummer, die Bank oder das Bankkonto oder eine Kreditkarte des Benutzers beinhalten. In einer bevorzugten Ausführungsform wird mit dem Signal, das von der Verifizierungsvorrichtung zu der ersten Vorrichtung übertragen wird, und über die zumindest zweidimensionale Darstellung, bzw. das NFC-Signal der zweiten Vorrichtung mitgeteilt, an welche Verifizierungsvorrichtung die zweite Vorrichtung das Aufnahmesignal oder eine zweite Information, die von dem Aufnahmesignal abhängt, übertragen muss, damit diese Verifizierungsvorrichtung aus dem Aufnahmesignal, bzw. der zweiten Information eine zweite Verifizierungsinformation erzeugen kann, die dann mit der ersten Verifizierungsinformation verglichen werden kann und das Transaktionssignal erzeugt werden kann, wenn der Vergleich ein vorbestimmtes Ergebnis ergibt.

Bei dem erfindungsgemäßen Verfahren erzeugt die Verifizierungsvorrichtung in Abhängigkeit der ersten Information (und in einer bevorzugten Ausführungsform auch in Abhängigkeit weiterer Informationen) eine erste Verifizierungsinformation. Diese Verifizierungsinformation kann beispielsweise den der zumindest zweidimensionalen Darstellung zugeordneten, bzw. dem dem Signal, aus dem das NFC-Signal erzeugt wird, zugrundegelegten Betrag umfassen. Die Verifizierungsinformation kann ferner eine Information über die Gültigkeitsdauer der zumindest zweidimensionalen Darstellung umfassen. Die Verifizierungsinformation kann auch die zumindest zweidimensionale Darstellung oder Teile davon enthalten, bzw. das Signal oder Teile des Signals enthalten, aus dem das NFC-Signal erzeugt wird. Ebenso kann die Verifizierungsinformation Informationen über eine Währung, das kontoführende Unternehmen des ersten Benutzers und Prämien enthalten, beispielsweise wenn dem ersten Benutzer eine Prämie zusteht und mit dem Transaktionssignal von einem Prämienguthaben abgebucht werden soll. Die Verifizierungsinformation wird insbesondere bevorzugt erzeugt, um in einem späteren Schritt des erfindungsgemäßen Verfahrens einen Vergleich mit einer zweiten Verifizierungsinformation vornehmen zu können, die durch Auswertung einer Kameraaufnahme der zumindest zweidimensionalen Darstellung erzeugt wird, bzw. auf Grundlage eines von einer zweiten Vorrichtung empfangenen NFC-Signals erzeugt wird. Der Vergleich der Verifizierungsinformationen ist bei dem erfindungsgemäßen Verfahren Voraussetzung für die Erzeugung des Transaktionssignals, das erzeugt wird, wenn der Vergleich ein vorbestimmtes Ergebnis ergibt. In einer bevorzugten Ausführungsform erhält die erste Verifizierungsinformation deshalb alle notwendigen Sicherheitsinhalte, die vorgesehen werden, um nach dem Vergleich mit der zweiten Verifizierungsinformation das Transaktionssignal zu erzeugen. Die Verifizierungsinformation kann ferner eine Information über den ersten Benutzer oder ein Erkennungsmerkmal der ersten Vorrichtung aufweisen. Die Verifizierungsinformation kann darüber hinaus ein Logo des kontoführenden Unternehmens enthalten.

Die erste Verifizierungsinformation kann in der Verifizierungsvorrichtung abgespeichert werden. Ebenso kann die Verifizierungsinformation oder eine Kopie der Verifizierungsvorrichtung in einer anderen Vorrichtung, beispielsweise einer alternativen Verifizierungsvorrichtung abgelegt werden. Beispielsweise kann die erste Verifizierungsvorrichtung das Computernetzwerk einer ersten Bank sein. Diese Verifizierungsvorrichtung kann eine Verifizierungsinformation erzeugen und diese in einem neutralen Computernetzwerk ablegen. Die alternative Verifizierungsvorrichtung, die aus dem Aufnahmesignal, bzw. der zweiten Information eine zweite Verifizierungsinformation erzeugt, kann beispielsweise das Computernetzwerk einer zweiten Bank sein, die die zweite Verifizierungsinformation ebenfalls an das neutrale Computernetzwerk abgeben kann, das die erste Verifizierungsinformation und die zweite Verifizierungsinformation miteinander vergleicht und das Ergebnis dieses Vergleichs sowohl der ersten Verifizierungsvorrichtung (dem Computernetzwerk der ersten Bank) als auch der alternativen Verifizierungsvorrichtung (dem Computernetzwerk der zweiten Bank) mitteilt, sodass zwischen der ersten Verifizierungsvorrichtung und der alternativen Verifizierungsvorrichtung ein Transaktionssignal erzeugt werden kann.

Die Übertragung des Signals von der Verifizierungsvorrichtung zu der ersten Vorrichtung kann unter Verwendung der gleichen Übertragungsmittel erfolgen, mit denen die erste Information von der ersten Vorrichtung zu der Verifizierungsvorrichtung übertragen wurde.

Das von der Verifizierungsvorrichtung zu der ersten Vorrichtung übertragene Signal kann von der ersten Vorrichtung dazu verwendet werden, um unmittelbar die zumindest zweidimensionale Darstellung zu erzeugen und diese auf dem Display der ersten Vorrichtung wiederzugeben, bzw. um unmittelbar das NFC-Signal zu erzeugen. Das von der Verifizierungsvorrichtung zu der ersten Vorrichtung übertragene Signal, bzw. ein davon abhängiges internes Signal kann jedoch auch in einem Speicher der ersten Vorrichtung abgelegt werden, sodass bei einer bevorzugten Ausführungsform des erfindungsgemäßen Verfahrens die erste Vorrichtung die zumindest zweidimensionale Darstellung erst auf eine von dem Benutzer gesteuerte Aufforderung hin auf dem Display der ersten Vorrichtung wiedergegeben wird, bzw. das NFC-Signal erst auf eine von dem Benutzer gesteuerte Aufforderung hin erzeugt.

Bei der ersten Alternative des erfindungsgemäßen Verfahren, die von dem "Austausch" einer zumindest zweidimensionalen Darstellung ausgeht, wird die zumindest zweidimensionale Darstellung auf dem Display der ersten Vorrichtung mit einer Kamera einer zweiten Vorrichtung unter Erzeugung eines Aufnahmesignals aufgenommen. Als Kamera wird jede Vorrichtung verstanden, die aus einer zwei- oder dreidimensionalen optischen Darstellung ein Aufnahmesignal erzeugen kann.

Insbesondere werden unter dem Begriff Kamera digitale Fotokameras oder digitale Videokameras oder analoge Videokameras verstanden. Als Kamera wird beispielsweise aber auch ein Scanner verstanden, wie er aus Industrieeinsätzen zum Lesen eines Barcodes oder von Supermarktkassen oder von Transportdienstleistern zum Auslesen der einen QR-Code aufweisenden Fahrscheine bekannt sind.

In einer bevorzugten Ausführungsform kann die zweite Vorrichtung ein optisches und/oder akustisches Signal erzeugen, wenn die zumindest zweidimensionale Darstellung auf dem Display der ersten Vorrichtung an einem Ort gehalten wird, der im Focus der Kamera der zweiten Vorrichtung liegt. Ebenso kann die zweite Vorrichtung optische oder akustische Signale erzeugen, die ein Bewegen der zumindest zweidimensionalen Darstellung auf dem Display der ersten Vorrichtung an einen Ort im Focus der Kamera der zweiten Vorrichtung unterstützen. Beispielsweise können rote Signale oder leise akustische Signale erzeugt werden, wenn sich die zumindest zweidimensionale Darstellung auf dem Display der ersten Vorrichtung außerhalb eines Orts befindet, der im Focus der Kamera der zweiten Vorrichtung liegt, während grüne Signale oder lautere akustische Signale erzeugt werden können, wenn sich die zumindest zweidimensionale Darstellung auf dem Display der ersten Vorrichtung an einem Ort befindet, der im Focus der Kamera der zweiten Vorrichtung liegt.

Bei der zweiten Alternative des erfindungsgemäßen Verfahren, die von dem "Austausch" eines NFC-Signals ausgeht, wird das NFC-Signal unter Vewerndung des Near-Field-Communication-Standards von der ersten Vorrichtung zur zweiten Vorrichtung übertragen.

In einer bevorzugten Ausführungsform kann die erste und/oder zweite Vorrichtung ein optisches und/oder akustisches Signal erzeugen, wenn die erste Vorrichtung und die zweite Vorrichtung in ein räumliches Verhältnis zueinander gebracht werden, die das Übertragen des NFC-Signals ermöglichen. Ebenso kann die erste und/oder die zweite Vorrichtung optische oder akustische Signale erzeugen, die ein Bewegen der ersten und/oder der zweiten Vorrichtung an einen Ort, an dem das Übertragen des NFC-Signals möglich wird, unterstützen. Beispielsweise können rote Signale oder leise akustische Signale erzeugt werden, wenn sich die erste und/oder die zweite Vorrichtung außerhalb eines Orts befindet, an dem das Übertragen des NFC-Signals möglich ist, während grüne Signale oder lautere akustische Signale erzeugt werden können, wenn sich die erste und/oder zweite Vorrichtung an einem Ort befindet, an dem das Übertragen des NFC-Signals möglich ist.

Bei dem erfindungsgemäßen Verfahren überträgt die zweite Vorrichtung das Aufnahmesignal oder eine zweite Information, die von dem Aufnahmesignal abhängt, an die Verifizierungsvorrichtung oder eine alternative Verifizierungsvorrichtung. Das

Übertragen des Aufnahmesignals, bzw. der zweiten Information kann unverzüglich nach Erzeugen des Aufnahmesignals erfolgen. Ebenso kann das Aufnahmesignal, bzw. die zweite Information in einem Speicher der zweiten Vorrichtung zwischengespeichert werden und zu einem späteren Zeitpunkt an die Verifizierungsvorrichtung, bzw. eine alternative Verifizierungsvorrichtung übertragen werden. Das Aufnahmesignal, bzw. die zweite Information kann eine Information über den Zeitpunkt der Aufnahme enthalten.

In einer bevorzugten Ausführungsform erfolgt die Übertragung des Aufnahmesignals, bzw. des zweiten Information nur, wenn der Benutzer auf eine (ggf. weitere) Aufforderung hin eine (ggf. weitere) Bestätigung eingegeben hat. Beispielsweise kann der zweite Benutzer nachdem die zweite Vorrichtung das Aufnahmesignal, bzw. die zweite Information erzeugt hat mittels einer Aufforderung (optisch, akustisch, haptisch) aufgefordert werden, die Übertragung des Aufnahmesignals, bzw. der zweiten Information an die Verifizierungsvorrichtung, bzw. die alternative Verifzierungsvorrichtung freizugeben. In einer bevorzugten Ausführungsform kann gefordert werden, dass die Bestätigung unter Eingabe eines PIN erfolgt.

In einer bevorzugten Ausführungsform kann der Inhalt der zweiten Information oder eine separat übermittelte zweite Ortsinformation eine Information über den Standort der zweiten Vorrichtung beinhalten. In einer bevorzugten Ausführungsform ist die zweite Vorrichtung deshalb derart ausgebildet, dass sie ihre Position, beispielsweise durch Ausnutzung des Global Positioning Systems (GPS) bestimmen kann und die Information über ihre Position als Teil der ersten Information oder als separat übermittelte Ortsinformation von der zweiten Vorrichtung zu der Verifizierungsvorrichtung übertragen kann. Die Verifizierungsvorrichtung kann dazu ausgebildet sein, aufgrund der ihr übermittelten Information über den Standort der zweiten Vorrichtung eine Überprüfung vorzunehmen und ggf. die weitere Durchführung des erfindungsgemäßen Verfahrens zu blockieren. In einer bevorzugten Ausführungsform erhält die Verifizierungsvorrichtung sowohl von der ersten Vorrichtung als auch von der zweiten Vorrichtung Informationen über den Standort der ersten Vorrichtung und den Standort der zweiten Vorrichtung. Dies ermöglicht es der Verifizierungsvorrichtung zu prüfen, ob die erste Vorrichtung und die zweite Vorrichtung in einer solchen örtlichen Nähe zueinander sind, dass es plausibel erscheint, dass mit einer Kamera der zweiten Vorrichtung eine Aufnahme der zumindest zweidimensionalen Darstellung auf dem Display der ersten Vorrichtung aufgenommen wurde, bzw. von der ersten Vorrichtung zur zweiten Vorrichtung unter Verwendung des Near-Field-Kommunikation-Standards ein Signal übertragen werden konnte. Dabei kann es für diese Verifikation der örtlichen Nähe beispielsweise auch ausreichen, dass die erste Vorrichtung und die zweite Vorrichtung in der gleichen Zelle eines Mobilfunknetzes sind.

Der Inhalt der zweiten Information kann neben dem Betrag auch weitere Teilinformationen enthalten. Beispielsweise kann als Teil der zweiten Information eine Information über ein Erkennungsmerkmal der zweiten Vorrichtung enthalten sein Ein mögliches Erkennungsmerkmal kann z.B. die Geräte ID / - Identifikationsnummer sein. Ebenso kann als Teil der zweiten Information eine Information über eine von dem zweiten Benutzer nach einer Aufforderung eingegebene PIN sein.

Bei dem erfindungsgemäßen Verfahren erzeugt die Verifizierungsvorrichtung, bzw. die alternative Verifizierungsvorrichtung aus dem Aufnahmesignal, bzw. der zweiten Information eine zweite Verifizierungsinformation. Die erste Verifizierungsinformation und die zweite Verifizierungsinformation werden verglichen und das Transaktionssignal erzeugt, wenn der Vergleich ein vorbestimmtes Ergebnis ergibt.

Das erzeugte Transaktionssignal kann eine Information über den gewählten Betrag beinhalten, beispielsweise wenn das Transaktionssignal ursächlich dafür eingesetzt wird, das Konto eines ersten Benutzers um den gewählten Betrag zu mindern und den gewählten Betrag dem Konto eines zweiten Benutzers gutzuschreiben. Ebenso kann das Transaktionssignal eine Information über den ersten und/oder den zweiten Benutzer beinhalten, sodass in dem Konto des ersten Benutzers und/oder dem Konto des zweiten Benutzers die Information wiedergegeben werden kann, von welchem ersten Benutzer welcher Betrag auf welches Konto des zweiten Benutzers übertragen wurde. Es ist jedoch auch möglich, das erfindungsgemäße Verfahren unter Geheimhaltung der Identität der Benutzer durchzuführen. In diesem Ausführungsbeispiel kann das Transaktionssignal beispielsweise eine Information über das Datum und die Uhrzeit der Aufnahme durch die Kamera enthalten. Diese Information kann dem ersten Benutzer, bzw. dem zweiten Benutzer genügen, um zu überprüfen, ob sein Konto richtig belastet, bzw. sein Konto richtig gutgeschrieben wurde.

In einer bevorzugten Ausführungsform wird nach einem ersten, erfolgreichen, ein Transaktionssignal auslösenden Vergleich der ersten Verifizierungsinformation mit einer zweiten Verifizierungsinformation die erste Verifizierungsinformation entwertet, sodass keine weiteren Transaktionssignale erzeugt werden können. Damit kann die mehrfache Verwertung der zweidimensionalen Darstellung auf dem Display der ersten Vorrichtung ausgeschlossen werden.

In einer bevorzugten Ausführungsform erfolgt die Übertragung der ersten Information von der ersten Vorrichtung zur Verifizierungsvorrichtung, die Übertragung des Signals von der Verifizierungsvorrichtung zu der ersten Vorrichtung und/oder die Übertragung des Aufnahmesignals, bzw. der zweiten Information von der zweiten Vorrichtung an die Verifizierungsvorrichtung, bzw. die alternative Verifizierungsvorrichtung mittels eines Funknetzwerks, beispielsweise eines Mobilfunknetzwerks oder eines Computerfunknetzwerks, beispielsweise eines W-LAN. In einer bevorzugten Ausführungsform erfolgt die Übertragung nur über eine Teilstrecke über das Funknetzwerk und enthält auch Übertragungsabschnitte, bei denen die Übertragung über ein Kabel erfolgt.

In einer bevorzugten Ausführungsform ist die erste Vorrichtung dazu geeignet, eine Programmroutine zu verarbeiten, wobei der Benutzer zum Erzeugen der Information bei gestarteter Programmroutine nur einen von ihm gewählten Betrag eingibt und keine weiteren Informationen eingibt. Sollte in einer bevorzugten Ausführungsform des erfindungsgemäßen Verfahrens ein Verfahrensschritt vorgesehen sein, bei dem die Verbindung der ersten Vorrichtung mit der Verifizierungsvorrichtung authentifiziert wird, beispielsweise zwischen der ersten Vorrichtung und der Verifizierungsvorrichtung Informationen ausgetauscht werden, die die erste Vorrichtung individualisieren können, so erfolgt diese Authentifizierung in der bevorzugten Ausführungsform auf Grundlage von in der ersten Vorrichtung abgelegten Informationen und in der bevorzugten Ausführungsform nicht aufgrund weiterer Informationen, die der Benutzer im zeitlichen Kontext der Erzeugung der ersten Information eingibt, insbesondere nur aufgrund weiterer Informationen, die der Benutzer mindestens mehr als 5 Minuten, insbesondere mehr als 1 Stunde bevor der Benutzer mit der ersten Vorrichtung eine erste Information erzeugt, eingegeben haben muss. In einer bevorzugten Ausführungsform soll bei der Durchführung des erfindungsgemäßen Verfahrens vermieden werden, dass der Benutzer zum Erzeugen der ersten Information mehr als den Betrag wählen muss. Dadurch soll die Durchführung des erfindungsgemäßen Verfahrens vereinfacht werden, sodass der Benutzer es besonders gerne durchführt, insbesondere weil er zu deren Durchführung keine weiteren Informationen benötigt, beispielsweise sich keine Authentifizierungscodes oder dergleichen merken muss oder geheim zu haltende Informationen, wie beispielsweise Informationen seiner Kreditkarte eingeben muss.

In einer bevorzugten Ausführungsform ist die zweite Vorrichtung dazu geeignet, eine Programmroutine zu verarbeiten, wobei die zweite Vorrichtung das zu übertragende Aufnahmesignal, bzw. die zu übertragende zweite Information bei gestarteter Programmroutine auf Grundlage des von der Kamera erzeugten Aufnahmesignals erzeugt, ohne dass eine weitere Eingabe von Informationen in die zweite Vorrichtung erfolgt. Auch diese bevorzugte Ausführungsform soll die Handhabung des erfindungsgemäßen Verfahrens vereinfachen und vermeiden, dass ein Benutzer, der mit der zweiten Vorrichtung eine Aufnahme der zumindest zweidimensionalen Darstellung macht, weitere Informationen zur Hand haben muss, damit das erfindungsgemäße Verfahren weiter fortgeführt werden kann. So kann beispielsweise vermieden werden, dass der Benutzer, der mit der Kamera der zweiten Vorrichtung eine Aufnahme der Darstellung macht, einen Authentifizierungscode eingeben muss.

Es ist offensichtlich, dass bei den beiden zuletzt beschriebenen bevorzugten Ausführungsformen der Erfindung Sicherheitsrisiken bestehen, wenn zum Erzeugen und Übertragen der ersten Information und zum Erzeugen und Übertragen des Aufnahmesignals, bzw. der zweiten Information keine weiteren Informationen eingegeben werden müssen. In dieser bevorzugten Ausführungsform der Erfindung werden diese Sicherheitsrisiken jedoch in Kauf genommen, da das erfindungsgemäße Verfahren bevorzugt so gehandhabt werden soll, wie die Verbraucher Bargeld handhaben. Auch hier besteht das Risiko, dass eine von einem ersten Verbraucher gehaltene Banknote in falsche Hände gerät. Dieses Risiko wird von den Verbrauchern jedoch akzeptiert, da dadurch eine besonders einfache Handhabung von Beträgen erlaubt wird. Diese einfache Handhabung von Beträgen soll in einer bevorzugten Ausführungsform auch mit dem erfindungsgemäßen Verfahren möglich sein. Das erfindungsgemäße Verfahren kann andere Sicherheitsfunktionen bieten. So kann beispielsweise vorgesehen sein, dass die Verifizierungsvorrichtung nur dann ein Signal erzeugt, wenn die erste Information in Abhängigkeit von einem Betrag erzeugt wurde, der niedriger als ein festgelegter Betrag ist. Ebenso kann das erfindungsgemäße Verfahren mit aufladbaren Konten erfolgen, die der Verbraucher gezielt zur Durchführung des erfindungsgemäßen Verfahrens auflädt. Wird bei einer derartigen Ausführungsform das Signal durch die Verifizierungsvorrichtung nur dann erzeugt, wenn das Konto des Verbrauchers eine Deckung aufweist, so kann mit dieser Ausführungsform sichergestellt werden, dass der Verbraucher maximal den Betrag verliert, den er auf dieses spezielle Konto eingezahlt hat.

In einer bevorzugten Ausführungsform wird eine Bestätigungsinformation an die erste Vorrichtung und/oder die zweite Vorrichtung übertragen, wenn das Transaktionssignal erzeugt wird. Diese Bestätigungsinformation kann beispielsweise nur die Information enthalten, dass die Transaktion erfolgreich abgeschlossen worden ist. Die Bestätigungsinformation kann jedoch auch Zusatzinformationen enthalten. Beispielsweise kann die an die erste Vorrichtung übermittelte Bestätigungsinformation dem Benutzer der ersten Vorrichtung den Kontostand seines Kontos mitteilen. Ebenso kann eine an die zweite Vorrichtung übertragene Bestätigungsinformation dem Benutzer der zweiten Vorrichtung seinen Kontostand mitteilen. Die Bestätigungsinformation kann auch dazu verwendet werden, einen Beleg auszudrucken. So kann in Fallgestaltungen, in denen mittels des erfindungsgemäßen Verfahrens ein Kunde bei einem Händler eine Ware bezahlt eine Bestätigungsinformation an die Vorrichtung des Händlers geschickt werden und der Händler darauf hin einen Beleg ausdrucken, die er dem Kunden aushändigt. Dadurch erhält der Kunde einen weiteren Beleg darüber, dass er die Forderung des Händlers beglichen hat.

Nachfolgend wird die Erfindung anhand einer lediglich Ausführungsbeispiele darstellenden Zeichnung näher erläutert. Darin zeigen:
- Fig. 1: ein erstes Ablaufschema des erfindungsgemäßen Verfahrens
- Fig. 2: ein zweites Ablaufschema des erfindungsgemäßen Verfahrens,
- Fig. 3: ein drittes Ablaufschema des erfindungsgemäßen Verfahrens,
- Fig. 4: ein viertes Ablaufschema des erfindungsgemäßen Verfahrens,
- Fig. 5: ein fünftes Ablaufschema des erfindungsgemäßen Verfahrens.

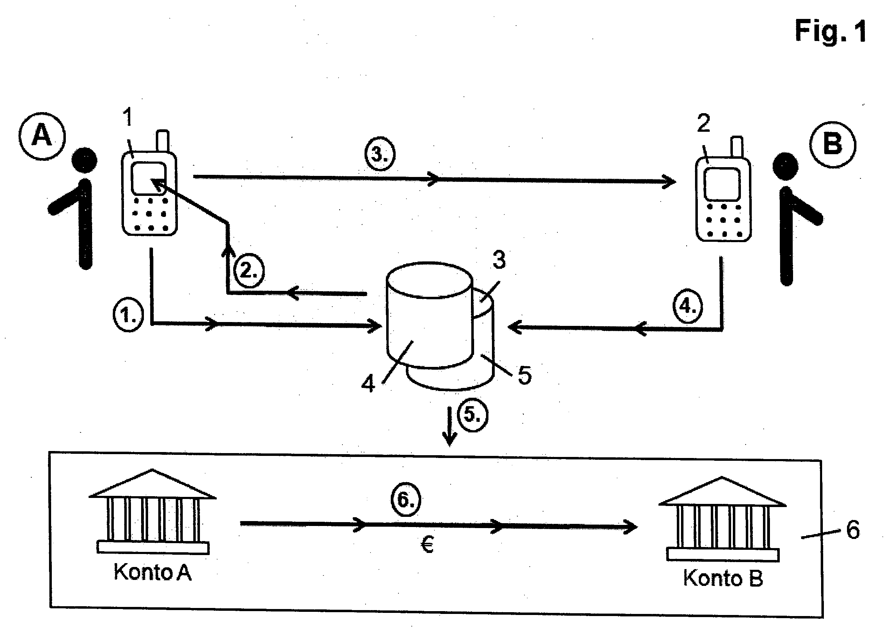

In der Figur 1 sind ein erster Benutzer A und ein zweiter Benutzer B dargestellt. Der erste Benutzer A weist eine als Mobiltelefon ausgebildete erste Vorrichtung 1 auf. Der Benutzer B weist eine als Mobiltelefon ausgebildete zweite Vorrichtung 2 auf. Die erste Vorrichtung 1 und die zweite Vorrichtung 2 stehen über ein Mobilfunknetz mit einer Verifizierungsvorrichtung 3 in Verbindung, die eine erste Datenverarbeitungseinrichtung 4 und eine zweite Datenverarbeitungseinrichtung 5 aufweist.

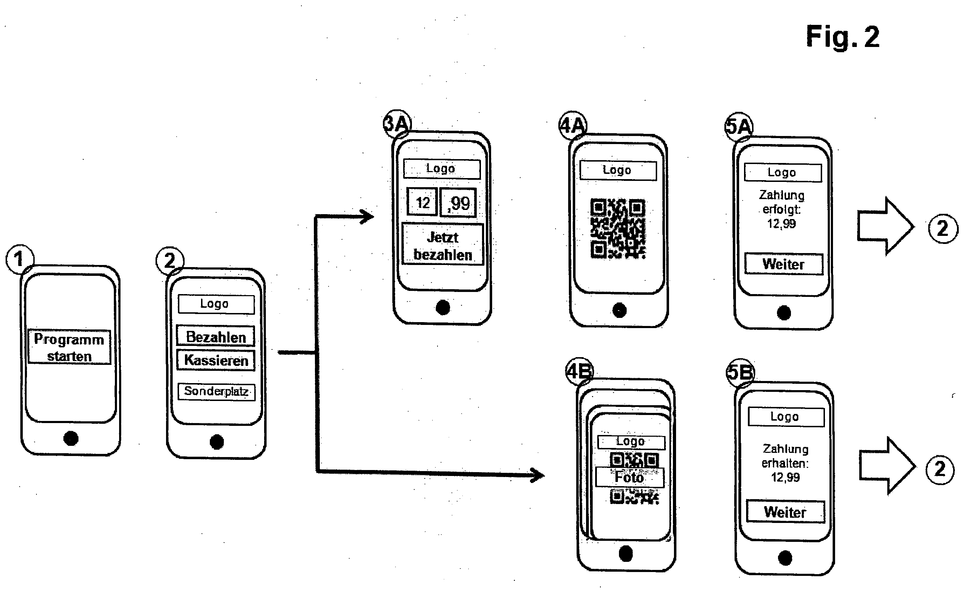

Wie in Figur 2 dargestellt, kann der Benutzer A die von ihm durchzuführenden Verfahrensschritte des erfindungsgemäßen Verfahrens dadurch durchführen, indem er auf seinem Mobiltelefon eine Programmroutine startet ("Programm starten"). Diese Programmroutine ist in einem Speicher des Mobiltelefons abgelegt. Spätestens zu dem Zeitpunkt, an dem der erste Benutzer die erste Information an die Verifizierungsvorrichtung 3 überträgt (Schritt 1. in der Figur 1, Schritt von der Darstellung 3a zur Darstellung 4a in Figur 2) ist das Mobiltelefon (erste Vorrichtung 1) in das Mobilfunknetz eingeloggt und über das Mobilfunknetz oder ein alternatives Funknetz in Kontakt mit der ersten Verifizierungsvorrichtung 3. Nach dem Start der Programmroutine kann die Programmroutine den Benutzer fragen, ob er im weiteren Verlauf der Programmroutine eine Zahlung durchführen möchte (den Barcode zum Abfotografieren durch eine zweite Vorrichtung auf seinem Display darstellen möchte) oder ob er im weiteren Verlauf der Programmroutine eine Zahlung empfangen möchte, also den auf einem Display einer anderen Vorrichtung dargestellten Barcode abfotografieren möchte. Zu diesem Zeitpunkt der Programmroutine kann dem Benutzer sein Kontostand mitgeteilt werden (Schritt 2 in der Figur 2).

Der erste Benutzer wählt in dem Schritt 2 der Figur 2 die Möglichkeit, einen Betrag zu zahlen ("Bezahlen"). Daraufhin wird der erste Benutzer durch die Programmroutine aufgefordert, einen Betrag zu wählen (Verfahrensschritt 3a in der Figur 2). Der Benutzer A gibt über eine (nicht dargestellte) Eingabevorrichtung, beispielsweise eine Darstellungsroutine auf dem berührungsempfindlichen Display der ersten Vorrichtung den von ihm gewählten Betrag (hier: 12,99) ein. Der Benutzer bestätigt den von ihm gewählten Betrag durch Auswahl eines Bestätigungsknopfes ("Jetzt bezahlen"). Nach dieser Eingabe erzeugt die erste Vorrichtung 1 eine Information, die von dem von dem Benutzer gewählten Betrag abhängt. Die erste Vorrichtung 1 überträgt die erste Information zu der Verifizierungsvorrichtung 3 (Schritt 1. in der Figur 1). Die Verifizierungsvorrichtung 3 erzeugt in Abhängigkeit von der ersten Information ein Signal, das dazu geeignet ist, von der ersten Vorrichtung 1 in eine Darstellung eines Barcodes umgesetzt zu werden, die die erste Vorrichtung 1 auf ihrem Display darstellen kann. Die Verifizierungsvorrichtung 3 erzeugt zudem in Abhängigkeit der ersten Information eine erste Verifizierungsinformation. Das Signal wird von der Verifizierungsvorrichtung 3 zu der ersten Vorrichtung 1 übertragen (Schritt 2. in der Figur 1) und von der ersten Vorrichtung 1 in eine zweidimensionale Darstellung eines Barcodes umgesetzt, die die erste Vorrichtung 1 auf dem Display der ersten Vorrichtung wiedergibt (Schritt 4a in der Figur 2).

Ein zweiter Benutzer hat die Schritte 1 und 2 der Figur 2 auf seiner zweiten Vorrichtung 2 durchgeführt und im Schritt 2 der Figur 2 ausgewählt, dass im weiteren Verlauf der Programmroutine eine Zahlung empfangen werden soll ("Kassieren"). Dadurch wird die Kamera der zweiten Vorrichtung aktiviert. In Verfahrensschritt 4b der Figur 2 (Verfahrensschritt 3. in der Figur 1) wird mit der Kamera der zweiten Vorrichtung 2 unter Erzeugung eines Aufnahmesignals die Darstellung des Barcodes auf dem Display der ersten Vorrichtung aufgenommen. Die zweite Vorrichtung 2 überträgt das Aufnahmesignal oder eine zweite Information, die von dem Aufnahmesignal abhängt, an die Verifizierungsvorrichtung 3 (Schritt 4. in der Figur 1). Die Verifizierungsvorrichtung 3 erzeugt aus dem Aufnahmesignal, bzw. der zweiten Information eine zweite Verifizierungsinformation und vergleicht die erste Verifizierungsinformation und die zweite Verifizierungsinformation miteinander. Bei dem Vergleich der ersten Verifizierungsinformation mit der zweiten Verifizierungsinformation wird verglichen, ob der Teil der ersten Verifizierungsinformation, bzw. der zweiten Verifizierungsinformation, die eine in dem Barcode codifizierte Information, bzw. eine aus dem Barcode ausgelesene Information enthält, übereinstimmen. Ferner wird bei dem Vergleich überprüft, ob die ebenfalls von der zweiten Vorrichtung 2 zur Verifizierungsinformation 3 übertragene Information über den Zeitpunkt der Aufnahme (wird in einem Teil der zweiten Verifizierungsinformation abgelegt) in einen Gültigkeitszeitraum fällt, der als Teil der ersten Verifizierungsinformation abgelegt ist. Ferner wird bei dem Vergleich überprüft, ob die hinter der ersten Verifizierungsinformation stehende Zahlung nicht bereits schon ausgelöst wurde und die erste Verifizierungsinformation danach deaktiviert wurde. Wird bei dem Vergleich festgestellt, dass die in den Barcode eingeschriebene Information und die aus dem Barcode ermittelte Information übereinstimmt, die Aufnahme zu einem Zeitpunkt getätigt wurde, in dem der Barcode noch aktiv war und nicht schon bereits mit einer vorherigen Aufnahme der Barcode eingelöst wurde, so gibt die Verifizierungsvorrichtung im Schritt 5. der Figur 1 eine Information an ein Kontenführungssystem 6. Aufgrund dieser Information wird in dem Kontenführungssystem 6 ein Transaktionssignal (6. Schritt in der Figur 1) erzeugt, mit dem der von dem ersten Benutzer im Schritt 3a der Figur 2 ausgewählte Betrag (12,99) dem Konto A des Benutzers A belastet und dem Konto B des Benutzers B gutgeschrieben wird.

Nach erfolgtem Belasten und Gutschreiben der Konten wird im Schritt 5a, bzw. Schritt 5b der Figur 2 dem Benutzer A, bzw. dem Benutzer B eine Bestätigungsinformation übermittelt. Daran anschließend kann der Benutzer A, bzw. der Benutzer B wählen, ob er in der laufenden Programmroutine in den Schritt 2 der Figur 2 erneut einsteigt oder die Programmroutine beendet.

Der in Fig. 1 als 2. Schritt dargestellte Schritt kann in einer alternativen Ausführungsform zu der vorbeschriebenen Ausführungsform auch darin besehen, dass die Datenverarbeitungseinrichtung 4 der ersten Vorrichtung 1 ein Signal sendet, in dessen Abhängigkeit die erste Vorrichtung 1 ein NFC-Signal erzeugen kann. In dieser alternativen Ausführungsform besteht der in Fig. 1 als 3. Schritt dargestellte Schritt dann darin, dass die erste Vorrichtung 1 das NFC-Signal an die zweite Vorrichtung 2 überträgt und die zweite Vorrichtung 2 auf Grundlage des NFC-Signals ein Aufnahmesignal erzeugt.

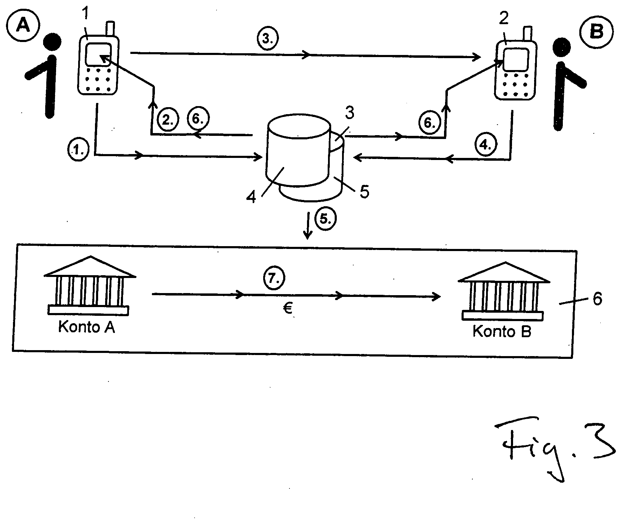

In der in Fig. 3 dargestellten alternativen Ausführungsform wird als 6. Schritt jeweils ein Bestätigungssignal an die erste Vorrichtung 1 und an die zweite Vorrichtung 2 geschickt und dann als 7. Schritt der in Fig. 1 als 6. Schritt und zuvor beschriebene Schritt durchgeführt. Im Übrigen werden auch bei diesem, in Fig. 3 dargestellten Verfahren die weiteren Schritte (1. bis 5. Schritt) durchgeführt, wie sie schon im Zusammenhang mit Fig. 1 und 2 gezeigt und beschrieben wurden.

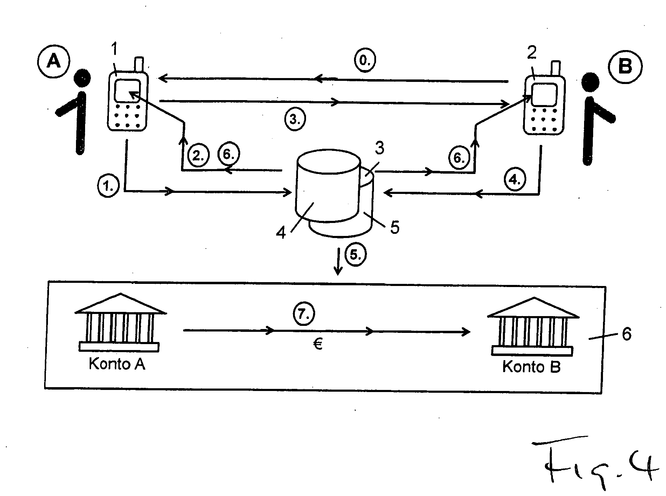

Bei der in Fig. 4 dargestellten alternativen Ausführungsform wird zu den in Fig. 3 dargestellten Schritten als 0. Schritt das Übertragen eines Forderungs-NFC-Signals dargestellt. So kann zweite Vorrichtung 2, beispielsweise ein Kassensystem, in Abhängigkeit eines Betrags, beispielsweise eines für eine Ware zu zahlenden Betrags, ein Forderungs-NFC-Signal erzeugen, das unter Verwendung des Near-Field-Communication-Standards von der zweiten Vorrichtung 2 der ersten Vorrichtung 1 unter Verwendung des Near-Field-Communication-Standards übertragen wird (0. Schritt in Fig. 4). Auf Grundlage des von der ersten Vorrichtung 1 empfangenen Forderungs-NFC-Signal kann der erste Benutzer eine erste Information erzeugen. Das kann beispielsweise dadurch erfolgen, dass der erste Benutzer mit der ersten Vorrichtung einen Authentifizierungsschritt durchführt. Sobald die erste Information erzeugt wurde, werden auch bei diesem, in Fig. 4 dargestellten Verfahren die weiteren Schritte (1. bis 7. Schritt) durchgeführt, wie sich schon im Zusammenhang mit Fig. 3 gezeigt und beschrieben wurden.

Die Fig. 1 bis 4 sind so angelegt, dass jeweils linkes der Benutzer dargestellt wird, der eine Forderung begleichen möchte (von dessen Konto ein Betrag abgehoben werden soll (siehe den 6. (Fig. 1, 2), bzw. 7. (Fig. 3,4) Schritt)), und jeweils rechts der Benutzer dargestellt wird, dessen Forderung beglichen werden soll. Die Fig. 1 bis 4 sind ferner so angelegt, dass der linke Benutzer die zumindest zweidimensionale Darstellung auf dem Display seiner ersten Vorrichtung 1 wiedergibt, bzw. dass der linke Benutzer mit seiner ersten Vorrichtung 1 das NFC-Signal versendet.

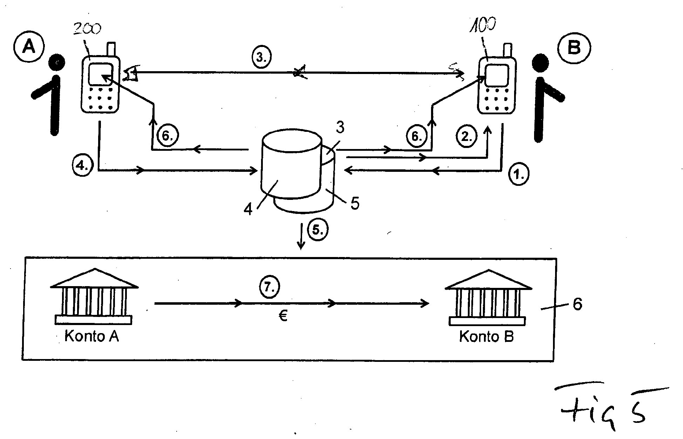

Anhand der Fig. 5 wird nun erläutert, dass eine Ausführungsform der Erfindung auch so ausgebildet sein kann, dass der Benutzer, dessen Forderung beglichen werden soll (in Fig. 5 ebenfalls als der rechte Benutzer dargestellt) die zumindest zweidimensionale Darstellung auf dem Display seiner ersten Vorrichtung 100 wiedergibt, bzw. dass der rechte Benutzer mit seiner ersten Vorrichtung 100 das NFC-Signal versendet und der Benutzer, der die Forderung begleichen soll (in Fig. 5 ebenfalls als linker Benutzer dargestellt), mit der Kamera seiner zweiten Vorrichtung 200 die auf der ersten Vorrichtung 100 des rechten Benutzers dargestellte Darstellung aufnimmt, bzw. mit seiner zweiten Vorrichtung 200 das von der ersten Vorrichtung 100 versendete NFC-Signal empfängt.

Zur Veranschaulichung wird die in Fig. 5 dargestellte Ausführungsform so beschrieben, als sei die erste Vorrichtung 100 Teil eines Kassensystems eines Händlers (der Händler ist der als rechter Benutzer dargestellte Benutzer) und die zweite Vorrichtung 200 das Mobiltelefon eines Käufers (der Käufer ist der als linker Benutzer dargestellte Benutzer). Der Händler (Benutzer B, rechter Benutzer) startet eine Programmroutine in seinem Kassensystem (erste Vorrichtung 100). Nach dem Start der Programmroutine kann die Programmroutine den Benutzer B auffordern, einen Betrag zu wählen. Der Benutzer B gibt über eine (nicht dargestellte) Eingabevorrichtung den von ihm geforderten Betrag ein. Nach dieser Eingabe erzeugt die erste Vorrichtung 100 eine Information, die von dem von dem Benutzer gewählten Betrag abhängt und zudem ein Erkennungsmerkmal der ersten Vorrichtung 100 enthält. Die erste Vorrichtung 100 überträgt die erste Information zu der Verifizierungsvorrichtung 3 (Schritt 1. in der Figur 5). Die Verifizierungsvorrichtung 3 erzeugt in Abhängigkeit von der ersten Information ein Signal. Die Verifizierungsvorrichtung 3 erzeugt zudem in Abhängigkeit der ersten Information eine erste Verifizierungsinformation. Das Signal wird von der Verifizierungsvorrichtung 3 zu der ersten Vorrichtung 100 übertragen (Schritt 2. in der Figur 5). Nach Empfang des Signals wird von der ersten Vorrichtung 100 ein NFC-Signal erzeugt, dass an die zweite Vorrichtung 200 gesendet. Das NFC-Signal wird von der zweiten Vorrichtung 200 empfangen (Schritt 3. in Fig. 5). Nach Empfang des NFC-Signal erzeugt die zweite Vorrichtung 200 eine Aufforderung auf dem Display der zweiten Vorrichtung 200 und fordert den Benutzer A (den linken Benutzer) zur Eingabe eines PIN auf. Der Benutzer A gibt den PIN über eine Eingabevorrichtung der zweiten Vorrichtung 200 ein. Die zweite Vorrichtung 200 erzeugt eine zweite Information, die von dem NFC-Signal und dem von dem Benutzer eingegebenen PIN und einem Erkennungsmerkmal der zweiten Vorrichtung 200 abhängt. Die zweite Vorrichtung 200 überträgt die zweite Information an die Verifizierungsvorrichtung 3 (Schritt 4. in der Figur 5). Die Verifizierungsvorrichtung 3 erzeugt aus der zweiten Information eine zweite Verifizierungsinformation und vergleicht die erste Verifizierungsinformation und die zweite Verifizierungsinformation miteinander. Stimmen die im Rahmen des Vergleichs zu überprüfenden Informationen überein, so erzeugt die Verifizierungsvorrichtung Bestätigungssignale, die an die erste Vorrichtung 100 (an den Benutzer B, den rechten Benutzer) und an die zweite Vorrichtung 200 (an den Benutzer A, den linken Benutzer) übermittelt werden (6. Schritt in Fig. 5). Der Händler (Benutzer B, rechter Benutzer) kann auf Grundlage des Bestätigungssignals einen Beleg ausdrucken, den er dem Kunden (Benutzer A, linker Benutzer) aushändigt. Ferner gibt die Verifizierungsvorrichtung im Schritt 5. der Figur 5 eine Information an ein Kontenführungssystem 6. Aufgrund dieser Information wird in dem Kontenführungssystem 6 ein Transaktionssignal (7. Schritt in der Figur 1) erzeugt, mit dem der von dem Benutzer B gewählte Betrag und von dem Benutzer A durch Eingabe des PIN bestätigte Betrag dem Konto A des Benutzers A belastet und dem Konto B des Benutzers B gutgeschrieben wird.

## Patentansprüche

1. Verfahren zum Erzeugen eines Transaktionssignals unter Verwendung einer ersten Vorrichtung und einer zweiten Vorrichtung, wobei die erste Vorrichtung und/oder die zweite Vorrichtung dazu geeignet ist, von einem Benutzer getragen zu werden, mit folgenden Schritten:
- ein Benutzer erzeugt mit einer ersten Vorrichtung eine erste Information, die von einem Betrag abhängt,
- die erste Vorrichtung überträgt die erste Information zu einer Verifizierungsvorrichtung,
- die Verifizierungsvorrichtung erzeugt in Abhängigkeit von der ersten Information ein Signal, das dazu geeignet ist, von der ersten Vorrichtung in eine zumindest zweidimensionale Darstellung umgesetzt zu werden, die die erste Vorrichtung auf einem Display der ersten Vorrichtung darstellen kann,
- die Verifizierungsvorrichtung erzeugt in Abhängigkeit der ersten Information eine erste Verifizierungsinformation,
- das Signal wird von der Verifizierungsvorrichtung zu der ersten Vorrichtung übertragen,
- das Signal wird von der ersten Vorrichtung in eine zumindest zweidimensionale Darstellung umgesetzt, die die erste Vorrichtung auf dem Display der ersten Vorrichtung wiedergibt,
- die zumindest zweidimensional Darstellung auf dem Display der ersten Vorrichtung wird mit einer Kamera einer zweiten Vorrichtung unter Erzeugung eines Aufnahmesignals aufgenommen,
- die zweite Vorrichtung überträgt das Aufnahmesignal oder eine zweite Information, die von dem Aufnahmesignal abhängt, an die Verifizierungsvorrichtung oder eine alternative Verifizierungsvorrichtung,
- die Verifizierungsvorrichtung, bzw. die alternative Verifizierungsvorrichtung erzeugt aus dem Aufnahmesignal, bzw. der zweiten Information eine zweite Verifizierungsinformation,
- die erste Verifizierungsinformation und die zweite Verifizierungsinformation werden verglichen und das Transaktionssignal erzeugt, wenn der Vergleich ein vorbestimmtes Ergebnis ergibt.

2. Verfahren zum Erzeugen eines Transaktionssignals unter Verwendung einer ersten Vorrichtung und einer zweiten Vorrichtung, wobei die erste Vorrichtung und/oder die zweite Vorrichtung dazu geeignet ist, von einem Benutzer getragen zu werden, mit folgenden Schritten:
- ein Benutzer erzeugt mit einer ersten Vorrichtung eine erste Information, die von einem Betrag abhängt,
- die erste Vorrichtung überträgt die erste Information zu einer Verifizierungsvorrichtung,
- die Verifizierungsvorrichtung erzeugt in Abhängigkeit von der ersten Information ein Signal, das von der Verifizierungsvorrichtung zu der ersten Vorrichtung übertragen wird,
- die Verifizierungsvorrichtung erzeugt in Abhängigkeit der ersten Information eine erste Verifizierungsinformation,
- die erste Vorrichtung erzeugt in Abhängigkeit des Signals ein NFC-Signal, das unter Verwendung des Near-Field-Communication-Standards von der ersten Vorrichtung zur einer zweiten Vorrichtung übertragen werden kann, und von der ersten Vorrichtung zur zweiten Vorrichtung unter Verwendung des Near-Field-Communication-Standards übertragen wird,
- die zweiten Vorrichtung erzeugt auf Grundlage des über von ihr empfangenen NFC-Signals Aufnahmesignal,
- die zweite Vorrichtung überträgt das Aufnahmesignal oder eine zweite Information, die von dem Aufnahmesignal abhängt, an die Verifizierungsvorrichtung oder eine alternative Verifizierungsvorrichtung,
- die Verifizierungsvorrichtung, bzw. die alternative Verifizierungsvorrichtung erzeugt aus dem Aufnahmesignal, bzw. der zweiten Information eine zweite Verifizierungsinformation,
- die erste Verifizierungsinformation und die zweite Verifizierungsinformation werden verglichen und das Transaktionssignal erzeugt, wenn der Vergleich ein vorbestimmtes Ergebnis ergibt.

3. Verfahren nach Anspruch 1 oder 2, **dadurch gekennzeichnet, dass** die erste Vorrichtung und/oder die zweite Vorrichtung ein portabler Computer oder ein Mobiltelefon ist.

4. Verfahren nach Anspruch 1 oder 2, **dadurch gekennzeichnet, dass** die Übertragung der ersten Information von der ersten Vorrichtung zu der Verifizierungsvorrichtung, die Übertragung des Signals von der Verifizierungsvorrichtung zu der ersten Vorrichtung und/oder die Übertragung des Aufnahmesignals, bzw. der zweiten Information von der zweiten Vorrichtung an die Verifizierungsvorrichtung, bzw. die alternative Verifizierungsvorrichtung mittels eines Funknetzwerks erfolgt.

5. Verfahren nach einem der Ansprüche 1 , 3 und 4, **dadurch gekennzeichnet, dass** das von der Verifizierungsvorrichtung erzeugte Signal dazu geeignet ist, von der ersten Vorrichtung in eine mindestens zweidimensionale Darstellung eines Barcodes umgesetzt zu werden und die erste Vorrichtung das Signal in eine mindestens zweidimensionale Darstellung eines Barcodes umsetzt, die die erste Vorrichtung auf dem Display der ersten Vorrichtung wiedergibt.

6. Verfahren nach einem der Ansprüche 1 bis 4, **dadurch gekennzeichnet, dass** die erste Vorrichtung dazu geeignet ist, eine Programmroutine zu verarbeiten und dass der Benutzer zum Erzeugen der Information bei gestarteter Programmroutine nur einen von ihm gewählten Betrag eingibt und keine weiteren Informationen eingibt und/oder dass die zweite Vorrichtung dazu geeignet ist, eine Programmroutine zu verarbeiten und dass die zweite Vorrichtung das zu übertragende Aufnahmesignal, bzw. die zu übertragende zweite Information bei gestarteter Programmroutine auf Grundlage des von der Kamera erzeugten Aufnahmesignals erzeugt, ohne dass eine weitere Eingabe von Informationen in die zweite Vorrichtung erfolgt.

7. Verfahren nach einem der Ansprüche 1 bis 5, **dadurch gekennzeichnet, dass** eine Bestätigungsinformation an die erste Vorrichtung und/oder die zweite Vorrichtung übertragen wird, wenn das Transaktionssignal erzeugt wird.
